Europäisches Patentamt

European Patent Office

Office européen des brevets

(11) Publication number: 0 328 308
A1

## EUROPEAN PATENT APPLICATION

(21) Application number: 89301039.7

(22) Date of filing: 03.02.89

(51) Int. Cl.⁴: F 23 J 11/04
F 23 J 11/02, B 60 H 1/00,
F 24 C 15/00

(30) Priority: 10.02.88 GB 8803046

(43) Date of publication of application:
16.08.89 Bulletin 89/33

(84) Designated Contracting States:
AT BE CH DE FR IT LI LU NL SE

(71) Applicant: CANNON INDUSTRIES LIMITED
Gough Road
Bilston West Midlands WV14 8XR (GB)

(72) Inventor: Pompe, Anthony Lawrence Alfred
Hafod-Y-Bryn Llanbedr
Gwynedd Wales (GB)

(74) Representative: Maury, Richard Philip
The General Electric Company p.l.c. G.E.C. Patent
Department (Wembley Office) Hirst Research Centre
East Lane
Wembley Middlesex HA9 7PP (GB)

(54) Flue system.

(57) A combustible gas heating system, more especially for
caravan use, coprises a water heater (A) and a space heater
(C), the flue products of both heaters being discharged to the
atmosphere via a common flue duct (F1).

Fig.1.

Bundesdruckerei Berlin

## Description

### Flue System

This invention relates to combustible gas heating systems and, in particular, to such heating systems for substantially enclosed accommodation units such as caravans.

In conventional caravans, space heating is usually provided by gas convector heaters which are either separately open flued or draw air from beneath the floor and discharge the flue products at roof level or below the floor level.

Central heating appliances with miniature pumped systems have also been produced to provide hot water indirectly by means of a calorifier as well as space heating. However, domestic hot water for caravans is commonly provided by types of gas heated storage water heaters containing limited amounts of water (between 10 and 20 litres) or by the use of a normal domestic instantaneous sink or single point water heater, fixed to the wall in the kitchen area and flued to outside air.

A defect of the instantaneous water heaters as commonly used hitherto is that the air for combustion and the excess air for flue dilution is taken from within the caravan.

It is an object of the present invention to provide a heating system which overcomes some of the problems associated with conventional heating systems.

According to the invention, a combustible gas heating system for an accommodation unit comprises a water heater and a space heater, the flue products of both said heaters being discharged via one end of a common flue duct into the air outside the unit.

For use in a caravan, the common flue duct may extend substantially vertically to a terminal in the caravan roof. In conventional systems, each heater has a respective flue duct, so that several unsightly roof or side wall terminals are required.

Preferably, input air which is fed to the combustion chambers of each heater is supplied from outside the unit, preferably through individual inlets so that the heating system neither withdraws air from nor discharges flue products into the unit so that it may be said to be 'sealed'.

To ensure that this system meets standard safety requirements, both ends of the common flue duct are open to the air outside the unit. Satisfactory results have been obtained where the outlets from the combustion chambers of both heaters are connected directly to the common flue duct via respective flue pipes. Deflectors are preferably provided within the flue duct at the junctions between the flue pipes and the common flue duct to deflect downdraughts away from the flue pipes so as to ensure satisfactory updraughting and downdraughting. If the heaters are attached to the respective flue pipes by means of respective split flange fittings, this will allow disconnection for servicing purposes.

Alternatively, each of the respective flue pipes may be connected to a secondary duct which is closed at one end but open to the outside air at the other end, this secondary duct being coupled to the common flue duct.

The invention is further illustrated by a description by way of example, with reference to the accompanying drawings, of two alternative forms of heated systems suitable for caravan use.

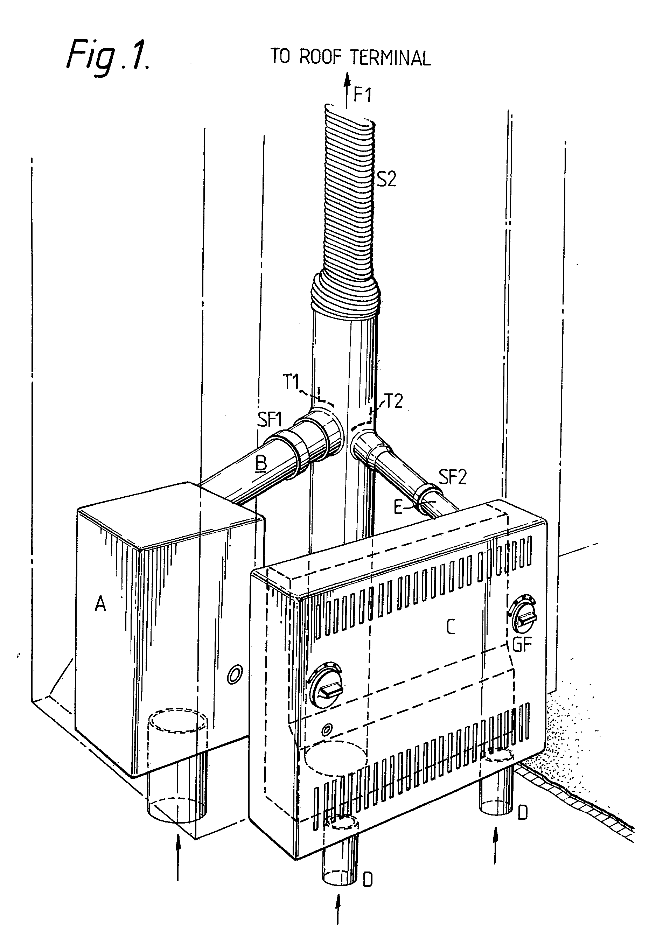

In the drawings Figure 1 is a diagram showing the first heating system, which incorporates a space heater and a water heater connected to one form of flue arrangement,

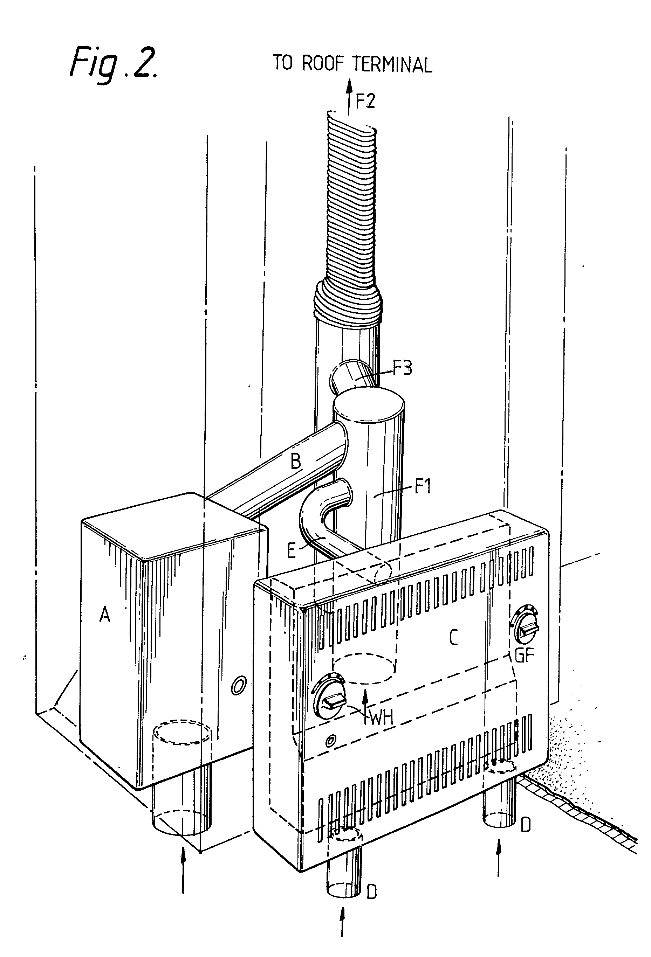

Figure 2 is a diagram showing the second heating system in which the space heater and water heater are connected to an alternative form of flue arrangement.

In Figure 1, the flue arrangement includes a common flue duct F1 which extends substantially vertically and is attached to the floor of a caravan by a flange (not shown). The duct F1 is open to the outside air at both ends thereof, so that hot air flowing upwards through the duct exit through a terminal in the roof of the caravan. Connected to the common flue duct F1 is a water heater A, the connection being made via a split flange fitting SF1 and a flue pipe B carrying combustion products from the water heater. A further split flange fitting SF2 attaches the flue pipe E from a convector heater C to the common flue duct F1. Deflectors T1, T2 are provided within the common flue duct F1 adjacent to the junction with the respective flue pipes B, E to prevent draughts affecting the performance of the heaters. To reduce the space taken up by the common flue, its cross-section may be smaller above and below the junctions with the heaters.

In the alternative system, as shown in Figure 2, the water heater A and convector heater C again share a common flue duct F2. The common flue duct F2 similarly extends from the floor to the roof of the caravan but, instead of being connected directly to the flue pipes of the water heater and convector heater, it is coupled by a duct F3 to a secondary duct F1 which acts as a diverter pipe and which is itself connected to the water heater and convector heater. The top end of the secondary duct F1 is closed, the bottom end being open. Two spigots are provided in the secondary duct to attach flue pipes of the water heater A and the convector heater C.

For caravan use the convector heater is conveniently fitted into the caravan wardrobe space. The air for combustion may either be drawn directly from one or more inlet ducts each passing into an aperture D in the floor, or the heater may be situated on a false floor positioned over the floor of the caravan. In this second arrangement, the aperture in the floor of the caravan is not directly connected to the aperture in the false floor beneath the heater, thus the aperture in the caravan floor need not be formed directly below the inlet duct.

In either installation the flow of air through the system and the expulsion of the products of combustion may be enchanced by the provision of one or more suitably located fans. Such a fan may be disposed within part of the flue duct, although individual fans may alternatively be located within the air inlets to the two heaters. The fan or fans may be arranged to be energised automatically when the heaters, or a respective one of the heaters is operated.

## Claims

1. A combustible gas heating system for an accommodation unit comprising a water heater and a space heater, the flue products of both said heaters being discharged via one end of a common flue duct into the air outside the unit.

2. A heating system according to Claim 1 installed in a caravan wherein the common flue extends substantially vertically to a terminal in the caravan roof.

3. A heating system according to Claim 1 or 2 wherein the input air is fed to the combustion chambers of each heater is supplied from outside the unit.

4. A heating system according to any preceding claim wherein both ends of the common flue duct are open to the air outside the unit.

5. A heating system according to any preceding claim wherein the outlets from the combustion chambers of both heaters are connected directly to the common flue duct via respective flue pipes.

6. A heating system according to Claim 5 wherein deflectors are provided within the flue duct at the junctions of the flue pipes and the common flue duct to delect downdraughts away from the flue pipes.

7. A heating system according to Claim 5 or 6 wherein the heaters are attached to the respective flue pipes by means of respective split flange fittings.

8. A heating system according any one of Claims 1 to 4 wherein each of the respective flue pipes is connected to a secondary duct which is closed at one end but open to the outside air at the other end, this secondary duct being coupled to the common flue duct.

# Fig.1.

TO ROOF TERMINAL

F1

S2

T1

T2

SF1

B

SF2

E

A

C

GF

D

D

# Fig .2.

TO ROOF TERMINAL

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 187 833 (ZAHORA) <br> * Column 1, line 64 - column 4, line 17; figure * | 1,5-7 | F 23 J 11/04 <br> F 23 J 11/02 <br> B 60 H 1/00 <br> F 24 C 15/00 |
| Y | | 2-4 | |
| A | | 8 | |
| | --- | | |
| Y | GB-A-2 165 940 (ROBINSON WILLEY) <br> * Page 1, lines 31-52; figure * | 2-4 | |
| | --- | | |
| X | GB-A-1 127 792 (GAS COUNCIL) <br> * Page 2, lines 43-64; figure 1 * | 1,3-5,7 | |
| | --- | | |
| X | FR-A-2 352 254 (FIMEC) <br> * Figure 1 * | 1,5 | |
| | ----- | | |

TECHNICAL FIELDS SEARCHED (Int. Cl.4)

F 23 J
F 24 C
B 60 H
B 60 P
B 60 N

The present search report has been drawn up for all claims

| Place of search | Date of completion of the search | Examiner |
|---|---|---|
| THE HAGUE | 10-05-1989 | PESCHEL G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)